Europäisches Patentamt

European Patent Office

Office européen des brevets

(11) Publication number: **0 132 103**
**B1**

## EUROPEAN PATENT SPECIFICATION

(45) Date of publication of patent specification: **13.01.88**

(21) Application number: **84304694.7**

(22) Date of filing: **10.07.84**

(51) Int. Cl.⁴: **B 62 D 33/08**

(54) **Curtainsided van bodies.**

(30) Priority: **13.07.83 GB 8318928**

(43) Date of publication of application:
**23.01.85 Bulletin 85/04**

(45) Publication of the grant of the patent:
**13.01.88 Bulletin 88/02**

(84) Designated Contracting States:
**BE DE FR GB IT NL SE**

(56) References cited:
**EP-A-0 051 931**
**DE-A-3 049 567**
**DE-U-8 123 700**
**DE-U-8 219 294**
**GB-A-1 262 879**
**GB-A-1 262 880**

(73) Proprietor: **BOALLOY LIMITED**
**Radnor Park Trading Estate West Heath**
**Congleton Cheshire CW12 4QA (GB)**

(72) Inventor: **Broadbent, Edward Gerald**
**91 Park Lane**
**Sandbach Cheshire, CW11 9EE (GB)**

(74) Representative: **Massey, Alexander et al**
**MARKS & CLERK Suite 301 Sunlight House Quay**
**Street**
**Manchester, M3 3JY (GB)**

Courier Press, Leamington Spa, England.

## Description

This invention relates to curtainsided van bodies.

By the term "van body" as used herein and in the claims we mean the structure defining a cargo-holding space on a road vehicle (trailer or self-propelled), on a railway wagon, or a container transportable by road, rail, sea or air.

In general terms, a curtainsided van body comprises a roof supported above a floor usually by end walls and, depending on the length of van bodies side, one or more side pillars. One of the end walls, normally the rear, may incorporate a door or doors or may be of open construction closable by a curtain as further described hereafter.

Generally, however, a curtainsided van body has its two long or lateral sides of open construction closable by curtains. A curtain is normally releasably anchored at one end of the van body and is suspended from an overhead track along each open side by runners. The other (or free) end of the curtain normally incorporates an end pole for horizontal tensioning or restraining purposes.

When a curtain is pulled across the open side of a van body it is normally restrained or tensioned in both the horizontal and vertical planes.

The horizontal restraint or tensioning is usually effected by engaging the end pole in top and bottom spigots at the roof and floor at the other end of the van body. Rotation of the bottom spigot rotates the end pole about its own axis and the curtain is wound about the end pole and is so horizontally restrained or tensioned.

A superior and substantially more effective form of horizontal tensioning is disclosed in our British Patent Specifications Nos. GB—A— 1 262 879 and GB—A—1 262 880 which discloses the top and bottom spigots incorporated in a rotatable spool element into which the end pole is engaged and around which the curtain is wound by means of a ratchet tensioner, a brake or other locking device being provided releasably to lock the spool element in curtain-tensioned position. The important distinction of this method of horizontal tensioning is that the curtain is wound around a spool element which is an integral part of the van body structure, and not simply the end pole which overcomes the disadvantages of the end pole tendency to bend as a result of the curtain being wound therearound with the risk of pole-disengagement from the spigots. Consequent upon this, the curtain can be more positively tensioned in the horizontal plane.

The vertical tensioning is usually effected by longitudinally-spaced vertical straps incorporated in the curtain and being fastened at the top to the runners engageable in the overhead track and being engageable at the bottom by hooks or similar onto the can body rave, the straps being threaded through tensioning buckles to apply the vertical restraint or tension.

In some cases the straps are welded or otherwise fastened directly to the curtain (which is formed of a plastics material). The straps sometimes extend the full height of the curtain and sometimes for only a lower portion of the curtain height, or sometimes there are two straps attached to the curtain; one fastened to a runner and the other being threaded through a tensioning buckle.

Again a superior and substantially more effective form of vertical tensioning is disclosed in our aforesaid British Patent Specifications. In this case, each strap which is a load-bearing strap is secured to a runner and extends freely down a vertical sleeve in the curtain, being threaded in and out of eyelets in the sleeve before being threaded through its tensioning buckle. The important distinction of this method of vertical tensioning is that the straps provide the main load-bearing function of the tensioned curtain.

The present invention is particularly concerned with increasing the height of the cargo space within a curtainsided van body when required. For this purpose it is intended to make use of the invention disclosed in our European Patent No. 0051931 in which is disclosed a curtainsided van body in which selected pillars extending between the floor and roof of the van body are swingable outboard of the latter. This is achieved by providing each pillar with a top and bottom support extending at right angles to the pillar and pivoted respectively to a top rail and to the chassis of the van body. The pillar incorporates a locking mechanism which when released allows the pillar to be moved outboard of the van body. Ideally such swinging post can be swung through 180° allowing widening of the lateral area for cargo entry between the post and, say, the front end of the van body. Also, it will be manifest that with the post outboard of the van body in a plane at right angles to the length of the van body it is easier to load and unload cargo having a width tight relative to the van body width or greater than the latter.

It is known from DE—U—8123700 to provide a van body with vertical side pillars between the floor and roof of the van body, the vertical side pillars being extendible by hydraulic rams to increase the height of the cargo space between the floor and roof of the van body.

It is an object of the present invention to provide a curtainsided van body in accordance with EP—A—0051931 which includes the roof height adjustability aspect of DE—U—8123700 and which is provided with means for resisting any twisting tendency of the hydraulic rams.

According to the present invention this object is achieved by providing a curtainsided van body as defined in the accompanying claim 1.

An embodiment of the present invention will now be described, by way of example, with reference to the accompanying drawings, in which:—

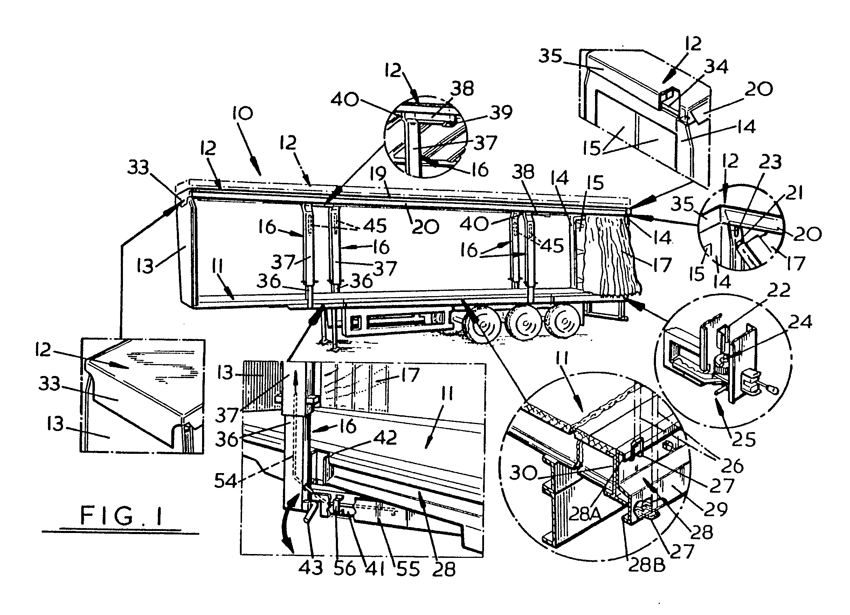

Fig. 1 is a side elevation with various detail views of a curtainsided van body substantially as disclosed in our aforesaid Patent Specifications and incorporating the present invention;

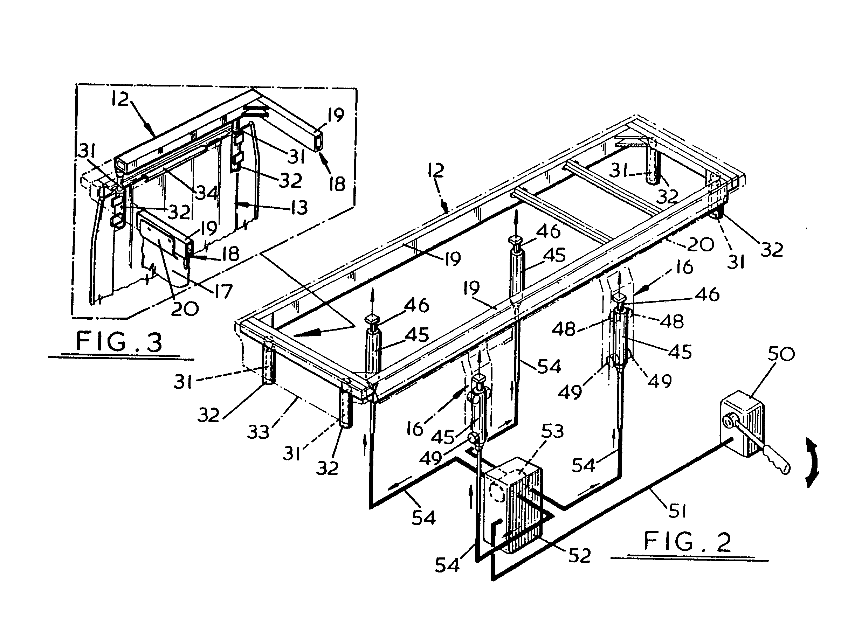

Fig. 2 is a diagrammatic perspective view of the roof, spigot-and-socket connections and hydraulic circuit of the van body;

Fig. 3 is a fragmentary detail view of the front end of the van body;

Fig. 4 is a perspective view of one of the pillars;

Fig. 5 is a fragmentary perspective view, to an enlarged scale, of the pillar of Fig. 4; and

Fig. 6 is a further fragmentary detail view of the upper part of the pillar.

The curtainsided van body, in this embodiment, is substantially as disclosed in our aforesaid British Patent Specifications and will now be described generally. The description and drawings of our aforesaid Patent Specifications are included herein by reference.

The van body 10 in this instance is a wheeled trailer and has a floor 11 with a roof 12 supported above same by a front wall or bulkhead 13, a rear frame 14 mounting a pair of hinged doors 15 and, at each open side of the van body 10, a pair of longitudinally-spaced pillars 16.

The open sides of the van body 10 are closable by a plastics curtain 17 suspended by runners 18 movable along an overhead track 19 shielded and protected by an external plastics valance or pelmet 20.

The plastics curtain 17 has at one end (the front end, in this instance) an end pole (not shown) receivable in non-rotatable fashion in top and bottom sockets. The other end of the curtain 17 has an end pole 21 receivable in a spool element or wrapper 22 has in a hollow end pillar of the van body 10, the end pole 20 being received by top and bottom spigots 23, 24. The bottom spigot 24 is incorporated in a ratchet tensioner or other winding mechanism 25 used horizontally to tension the curtain 17 across the open side of the van body 10. The ratchet tensioner 25, as is known, is locked against movement when the curtain 17 is across the open side to close same. When the ratchet tensioner 25 is released, the curtain 17 can be opened from either side by disengaging the appropriate end pole.

The curtain 17 is also constrained or tensioned in the vertical plane when in its open-side closing position. In our aforesaid Patent Specifications this is achieved by means of horizontally-spaced load-bearing straps 26 freely accommodated in vertical sleeves in the curtain 17 and each secured at the top to a runner 18 and being threaded through eyelets in the exterior wall of each sleeve and finally being threaded through a buckle or tensioner before terminating in a hook or similar 27 engageable on a rave 28 secured along the floor 11 at the open side of the van body 10. It will be manifest that before the curtain 17 can be moved to open the van body side each load-bearing strap 17 requires to be slackened and its hook 27 disengaged from the rave 28.

In this instance and for a reason to be amplified upon later, the rave 28 comprises two vertically-spaced hook-engaging formations 28A, 28B. These form part of a frame section 29 secured to a frame section 30 fastened to the side of the floor 11. The frame section 29 may be vertically adjustable relative to elevate hook-engaging formation 28A above the floor 11 if required.

When hook-engaging formation 28A is being used, the lower formation 28B which lies outboard of forming 28A serves as a rubbing rail to give protection to the curtains 17 from side damage while the van body 10 is being used in close or tight packed operations.

The van body roof 12, according to this invention, is elevatable above and clear of the front bulkhead or wall 13 and the rear frame 14 and rear doors 15.

The roof 12 is vertically movable as a unit and has at or adjacent each corner a depending spigot 31 freely movable in a complementary socket 32 secured to the inside of the front bulkhead 13 and the rear frame 14.

The roof 12 at the front end has a depending barrier or shield 33 in contact with the front face of the front bulkhead or wall 13 to prevent ingress of dirt, dust, rain, etc. as the van body 10 is travelling. A seal or gasket 34 may be provided on the top edge of the front bulkhead or wall 13 and/or on the underside of the roof 12 to close any gapping between the front wall 13 and the underside of the roof 12.

The rear end of the roof 12 has a short depending pelmet 35 which overlaps the rear frame 14 when the roof 13 is down without interfering with the opening and closing of the doors 15.

The means for raising and lowering the roof 12 are the supporting pillars 16 and associated hydraulic jacking equipment.

Each pillar 16 can be swung from an inboard position where it has alongside the van body roof 12 and floor 11 through 90° or thereabouts to an outboard position where the pillar is spaced from the van body roof 12 and floor 11.

Each pillar 16 is telescopic and has a lower inner part 36 and an upper outer part 37.

The upper pillar part 37 is connected by a right-angled arm 38 pivotally connected to the roof 12 at 39. The upper pillar part 37 is inwardly cranked at 40 so that in normal travelling position (i.e. pillar inboard position) the arm 38 lies under the roof 12 to provide substantial fore-and-aft support thereto.

The lower pillar part 36 is also connected to a right-angled arm 41 pivoted to the underside of the floor 11, the pillar 16, in the region of the floor 11 being received, in its inboard position, in a recess 42 in the floor 11. The pillar 16 has mounted in its lower part 36 a manually-operable spring-loaded locking pin 43 releasably engageable in an aperture in a locking plate 44 secured in the recess 42. With the pin 43 engaged in the plate 44, the pillar 16 cannot be swung outboard.

A single-acting hydraulic ram 45 is mounted inside each lower inner pillar part 36 adjacent its upper end with its piston rod 46 secured to a plate 47 fixed to the inside of the upper outer pillar part 37.

The hydraulic ram is secured and located in the inner pillar part 36 by two pairs of rollers 48 and 49 whereof the axes of one pair are normal to the other pair. These pairs of rollers 48 and 49 also resist any tendency of the hydraulic ram 45 to twist within the pillars 16.

The hydraulic rams 45 (four in this embodiment) are balanced and are simultaneously operated by a manually operable pump 50 connected by a pipeline 51 to a hydraulic fluid reservoir 52 which delivers through a flow divider 53 and pipelines 54 a balanced hydraulic pressure to each hydraulic ram 45.

The pipelines 54, at least insofar as their lengths through the arms 41 and pillars 16 are concerned, are in the form of flexible hoses. At the arms 41, the hoses 54 are protected by plates 55 secured to the arms 41 by brackets 56.

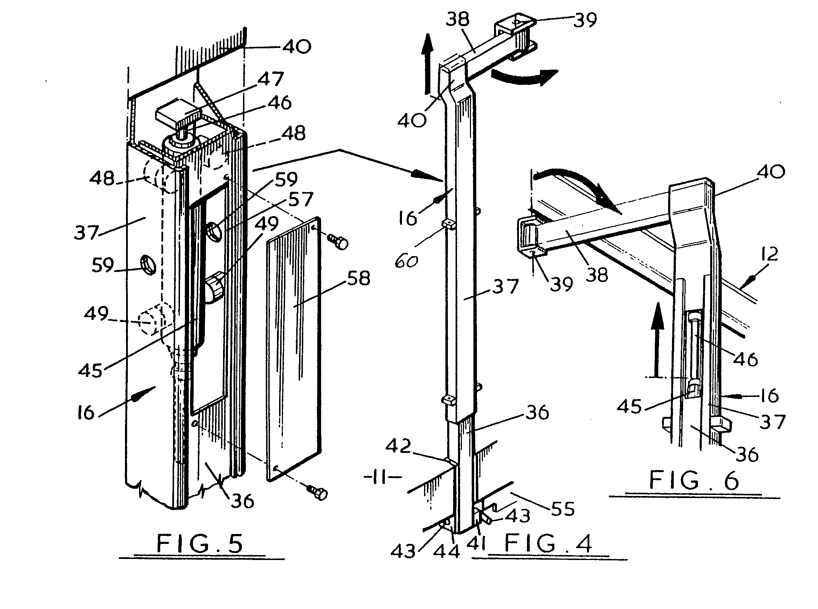

The upper outer pillar part 37 of each pillar 36 does not wholly enclose the lower inner pillar part 36 (see Figs. 5 and 6). The inner pillar part 36, therefore, at the region of each hydraulic ram 45 has an access opening 57 closable by a removable plate 58 to allow for ram repair or replacement.

Also, the pillar parts 36, 37 have side holes 59 which, when in register allow a C-bar or other restraint (not shown) to be inserted therethrough mechanically to lock the pillar parts 36, 37 against relative sliding movement to permit ram removal and replacement.

The outer upper pillar part 37 is provided with lateral lugs 60 (at least one) whereby if one of the hydraulic rams 45 becomes inoperative a jack (hydraulic or otherwise) can be used between the floor 11 and a lug 60 to permit the driver or operator to elevate the roof 12 assuming the other rams 45 are operative.

It will be manifest that this procedure can be employed if more than one ram 45 is inoperative.

With the curtains 17 released and drawn to one end of the van body 10 the swinging posts 16 can be used as elevating jacks to raise the roof 12 upwardly clear of the front and rear end 13 and 14, 15 to allow clear and easy side loading for loads higher than would normally be acceptable into the van body 10.

The elevation of the roof 12 can be effected with the pillars 16 in the inboard or outboard positions and the pillars 16 can be swung between inboard and outboard positions with the roof 12 in elevated position.

Also the swinging pillars 16 permit variation in the length and width of the lateral openings between the front and rear ends and the pillars for cargo loading or unloading.

Normally once the van body 10 is loaded with the roof 12 elevated the latter would be lowered due to its weight with the hydraulic pressure released from the rams 45 to flow back to the reservoir onto the front wall or bulkhead 13 and the rear frame 14, the pillars 16 retracting and, if in outboard position, swung into locked inboard position, and the curtains 17 could then be drawn across the open sides to close same and be both horizontally and vertically tensioned. The van body 10 would then be ready for travelling.

It is envisaged, however, that the van body 10 may be moved between locations with the roof in elevated position. In this case, the pillars 16 would be locked in inboard position in extended condition, the curtain 17 would be vertically tensioned by its bottom hooks 27 engaging upper frame formation 28A, possibly raised above the floor 11, and the end poles would have extensions (not shown) secured to their lower ends for securement in the socket at one end and on the spigot 24 at the other end. It is also envisaged that, in this instance, with a horizontal tensioning arrangement as is disclosed in our aforesaid Patent Specifications provision would have to be made to render the spool element or wrapper 22 extendible.

Alternative roof gliding arrangements may be employed.

One such arrangement may comprise a guide extending above each corner of the roof in the form of a vertical channel closed at its top and forming part of the van body front and rear structures. Within each channel is a guide roller suitably secured to the roof. Thus the roof can be raised and lowered within the confines or limits of the four corner guide channels.

Another roof guidance arrangement may comprise at each corner of the van body rear and rear structures, a location cone through which extends, preferably with play, a guide rod, the roof being movable vertically of the guide rod and being apertured, or socketted in its lower surface, to sit down on the end structures or pillars with proper and correct location being ensured by the location cones.

There may at each end of the van body be only a central location cone with suitable lateral guiding means at the roof corners.

With the aforesaid arrangement a curtainsided van body can now be adapted to carry consolidated loads whereas hitherto these are usually carried by covered wagons which can be stripped to a platform and framework and the load covered with a tarpaulin.

Also, this invention means that the total inboard height of the van body can be usefully employed.

## Claims

1. A curtainsided van body comprising a roof (12) vertically movably supported at either end above a floor (11) to define at least one open side closable by a curtain (17), which side has between the roof (12) and floor (11) and intermediate its front and rear end, at least one supporting pillar (16) mounted for swinging movement outboard of the van body, and for which purpose each swinging pillar has an arm (38, 41) extending at right angles respectively from the top part and the bottom part of the pillar (16) and pivotally connected to the van body roof (12) and floor (11) respectively, the van body being characterised in that each swinging pillar (16) is of two-part telescopic construction with the arm (38) extending from a top part (37) and the arm (41) extending from a lower part (36) and there being a pillar extending hydraulic ram (45) housed within the lower pillar part (36) and operatively connected to the upper pillar part (37) to raise the latter relative to the lower pillar part (36) and thereby the roof (12) relative to the floor (11) to increase the height of the cargo-accommodating space of the van body, and the van body being further characterised in that the hydraulic ram (45) is vertically located within the lower pillar part (36) by two associated pairs of vertically-spaced rollers (48, 49) bearing against the wall of the lower pillar part (36), thereby to assist in resisting any tendency of the hydraulic ram (45) to twist.

2. A curtainsided van body as claimed in claim 1 in which the or each pillar (16) in its normal position extends under the roof (12) and is accommodated at its bottom end in a recess in the van body rave (28), the arms (38, 41) lying parallel with the van body side.

3. A curtainsided van body as claimed in claim 1 or 2, in which the or each pillar (16) at its bottom end has a locking bolt (43) engageable in an aperture in a fixed vertical plate (44) forming part of the van body chassis, the bolt (43) being spring-urged into engagement with the vertical plate (44) and being provided with a handle to facilitate withdrawal.

4. A curtainsided van body as claimed in any one of claims 1 to 3, in which the roof (12) at its front and rear has guide means (31, 32) associated with the end walls (13, 14) or similar of the van body which permit vertical movement of the roof (12) relative to the van body.

5. A curtainsided van body as claimed in claim 4, in which the roof (12) at its front and rear at or adjacent each corner is formed with a depending spigot (31) freely engageable in a socket (32) secured to an end wall (13, 14) of the van body.

6. A curtainsided van body as claimed in claim 4 or 5, in which the roof (12), at its front end, has a depending shield (33) for overlapping engagement with the front surface of the front wall (13) of the van body.

7. A curtainsided van body as claimed in any one of claims 4 to 6 in which a seal member or gasket (34) is provided between the top edge of the front wall (13) of the van body and the roof (12).

8. A curtainsided van body as claimed in any one of claims 1 to 7, in which the pillar parts (36, 37) are each provided with aligned holes (59) adapted to be brought into register to permit the pillar parts (36, 37) to be mechanically locked by a C-bar or other restraint to permit the hydraulic ram (45) to be repaired, maintained or replaced.

9. A curtainsided van body as claimed in any one of claims 1 to 8 in which the lower pillar part (36) has at least one external lateral lug (60) between which and the van body floor a jack (hydraulic or other) can be operatively located to extend the pillar (16) should the internal hydraulic ram (45) be inoperable.

10. A curtainsided van body as claimed in any one of claims 1 to 9, in which the hydraulic ram (45) of each pillar (16) is connected by hydraulic fluid supply piping (54) to a flow divider (53) in communication with a hydraulic fluid reservoir (52) to which is connected a pump (50).

11. A curtainsided van body as claimed in any one of claims 1 to 10, in which the hydraulic rams (45) are single acting, the weight of the roof (12) telescoping the rams (45) on release of the hydraulic fluid pressure.

12. A curtainsided van body as claimed in claim 10 or 11, in which the pump (50) is manually operable.

**Patentansprüche**

1. Lastwagenaufbau mit Abdeckplane, mit einem Dach (12), das vertikal beweglich an beiden Enden über einem Boden (11) gelagert ist und mindestens eines offene Seite bildet, die mit einer Plane (17) schließbar ist, wobei diese Seite zwischen dem Dach (12) und dem Boden (11) sowie zwischen ihren vorderen und hinteren Enden mindestens eine tragende Stütze (16) aufweist, die für eine Schwenkbewegung vom Lastwagenaufbau nach außen montiert ist, wobei zu diesem Zweck jede schwenkbare Stütze einen Arm (38, 41) aufweist, die sich jeweils unter rechten Winkeln von dem oberen Teil und dem unteren Teil der Stütze (16) erstrecken und die drehbar mit dem Dach (12) bzw. dem Boden (11) des Lastwagenaufbaus verbunden sind, dadurch gekennzeichnet,

daß jede schwenkbare Stütze (16) eine zweiteilige Teleskopkonstruktion aufweist, bei der sich der Arm (38) von dem oberen Teil (37) aus und der Arm (41) sich von dem unteren Teil (36) aus erstreckt und wobei ein Hydraulikkolben (45) zum Ausfahren der Stütze vorgesehen ist, der innerhalb des unteren Teiles (36) der Stütze vorgesehen ist, der innerhalb des unteren Teiles (36) der Stütze untergebracht und der betriebsmäßig mit dem oberen Teil (37) der Stütze verbunden ist, um letzteres relativ zum unteren Teil (36) der Stütze und damit das Dach (12) relativ zum Boden (11) nach oben zu bewegen und dadurch die Höhe des Laderaumes des Lastwagenaufbaus zu vergrößern,

wobei der Lastwagenaufbau weiterhin dadurch gekennzeichnet ist, daß der Hydraulikkolben (45) innerhalb des unteren Teiles (36) der Stütze von zwei zugeordneten Paaren von vertikal beabstandeten Rollen (48, 49) vertikal angeordnet ist, die gegen die Wand des unteren Teiles (36) der Stütze drücken, um dadurch den Widerstand gegen jegliche Tendenz des Hydraulikkolbens (45) zum Verdrehen zu unterstützen.

2. Lastwagenaufbau mit Abdeckplane nach Anspruch 1, wobei die oder jede Stütze (16) in ihrer Normalstellung sich unter das Dach (12) erstreckt und an ihrem unteren Ende in einer Aussparung in dem Seitenbrett (28) an der Ladefläche des Lastwagenaufbaus aufgenommen ist, wobei die Arme (38, 41) parallel zu der Seite des Lastwagenaufbaus liegen.

3. Lastwagenaufbau mit Abdeckplane nach Anspruch 1 oder 2, wobei die oder jede Stütze (16) an ihrem unteren Ende einen Schloßriegel (43) aufweist, der mit einer Öffnung in einer festen vertikalen Platte (44) in Eingriff bringbar ist, welche einen Teil des Chassis des Lastwagenaufbaus bildet, wobei der Schloßriegel mit einer Feder in Eingriff mit der vertikalen Platte (44) vorgespannt und mit einem Griff versehen ist, um das Herausziehen zu erleichtern.

4. Lastwagenaufbau mit Abdeckplane nach einem der Ansprüche 1 bis 3, wobei das Dach (12) an seinen Vorder- und Rückseiten Führungseinrichtungen (31, 32) aufweist, die den Stirnwänden (13, 14) oder dergleichen des Lastwagenaufbaus zugeordnet sind und die eine vertikale Bewegung des Daches (12) relativ zum Lastwagenaufbau ermöglichen.

5. Lastwagenaufbau mit Abdeckplane nach Anspruch 4, wobei das Dach (12) an seinen Vorder- und Rückseiten an oder in der Nähe jeder Ecke mit einem nach unten weisenden Zapfen (31) ausgebildet ist, der mit einer Fassung (32) frei in Eingriff bringbar ist, die an einer Stirnwand (13, 14) des Lastwagenaufbaus befestigt ist.

6. Lastwagenaufbau mit Abdeckplane nach Anspruch 4 oder 5, wobei das Dach (12) an seinem vorderen Ende eine herunterhängende Abschirmung (33) zum überlappenden Eingriff mit der Vorderseite der vorderen Stirnwand (13) des Lastwagenaufbaus aufweist.

7. Lastwagenaufbau mit Abdeckplane nach einem der Ansprüche 4 bis 6, wobei ein Verschlußteil oder eine Dichtung (34) zwischen der Oberkante der vorderen Stirnwand (13) des Lastwagenaufbaus und dem Dach (12) vorgesehen ist.

8. Lastwagenaufbau mit Abdeckplane nach einem der Ansprüche 1 bis 7, wobei die Keile (36, 37) der Stütze jeweils mit ausgefluchteten Löchern (59) versehen sind, die sich miteinander zur Deckung bringen lassen, damit die Teile (36, 37) der Stütze sich mit einer C-Schiene oder einem andere Halteteil mechanisch verriegeln lassen, damit der Hydraulikkolben (45) repariert, gewartet oder ersetzt werden kann.

9. Lastwagenaufbau mit Abdeckplane nach einem der Ansprüche 1 bis 8, wobei das untere Teil (36) der Stütze zumindest eine äußere seitliche Nase (60) aufweist, zwischen der und dem Boden des Lastwagenaufbaus ein Wagenheber oder eine Hebeeinrichtung (hydraulisch oder anders) betriebsmäßig angeordnet werden kann, um die Stütze (16) auszufahren, sofern der innere Hydraulikkolben (45) unwirksam werden sollte.

10. Lastwagenaufbau mit Abdeckplane nach einem der Ansprüche 1 bis 9, wobei der Hydraulikkolben (45) jeder Stütze (16) über eine Hydraulikfluid-Versorgungsleitung (54) an eine Strömungsverzweigung (53) in Verbindung mit einem Hydraulikfluid-Vorratsbehälter (52) angeschlossen ist, der an eine Pumpe (50) angeschlossen ist.

11. Lastwagenaufbau mit Abdeckplane nach einem der Ansprüche 1 bis 10, wobei die Hydraulikkolben (45) einseitig wirkend sind, wobei das Gewicht des Daches (12) die Hydraulikkolben (45) beim Ablassen des Hydraulikfluiddruckes teleskopiert.

12. Lastwagenaufbau mit Abdeckplane nach Anspruch 10 oder 11, wobei die Pumpe (50) von Hand betätigbar ist.

**Revendications**

1. Carrosserie de remorque de camion à paroi-rideau comprenant un toir (12) monté de façon déplaçable verticalement à une extrémité quelconque au-dessus d'un plancher (11) pour définir au moins un côté ouvert pouvant être fermé par un paroi-rideau (17), le dit côté comprenant entre le troit (12) et le plancher (11), et en position intermédiaire entre les extrêmités avant et arrière, au moins un pilier de support (16) monté de façon à pouvoir osciller vers l'extérieur de la carrosserie de remoque, chaque pilier oscillant présentant à cet effet un bras (38, 41) formant un angle droit respectivement avec la partie supérieure et la partie inférieure du pilier (16) et raccordé en pivotement respectivement au toit (12) et au plancher (11) de la carrosserie de remorque, la carrosserie de remorque étant caractérisé en ce que chaque pilier oscillant (16) présente une structure télescopique en deux parties, le bras (38) s'étendant depuis une partie supérieure (37) et le bras (41) s'étendant depuis une partie inférieure (36), et un bras hydraulique (45) prolongeant le pilier étant logé dans la partie inférieure (36) du pilier et raccordé en fonctionnement à la partie supérieure (37) du pilier pour soulever cette dernière par rapport à la partie inférieure (36) du pilier et de ce fait, le toit (12) par rapport au plancher (11), pour augmenter la hauteur de l'espace de chargement de la carrosserie de remorque et la carrosserie de remorque étant caractérisée en outre en ce que le bras hydraulique (45) est logé verticalement à l'intérieur de la partie inférieure (36) du pilier au moyen de deux paires associées de cylindres (48, 49) espacés verticalement, s'appuyant contre la paroi de la partie inférieure (36) de pilier, pour assister ainsi toute tendance à la torsion du bras hydraulique (45).

2. Carrosserie de remorque de camion à paroi-rideau selon la revendication 1, dans lequel le ou chaque pilier (16) s'étend, dans sa position normale, sous le toit (12) et est logé, par son extrêmité inférieure, dans une cavité du panneau latéral (28) de la carrosserie, les bras (38, 41) s'étendant parallèlement au côté de la carrosserie.

3. Carrosserie de remorque de camion à paroi-rideau selon la revendication 1 ou 2, dans lequel le ou chaque pilier (16) comporte à son extrémité inférieure, une cheville de blocage (43) pouvant s'engager dans une ouverture d'une plaque verticale fixe (44) qui fait partie du châssis de la carrosserie, la cheville (43) étant pressée par un ressort vers la plaque verticale (44) et munie d'une poignée pour faciliter son retrait.

4. Carrosserie de remoque de camion à paroi-rideau selon l'une quelconque des revendications 1 à 3, dans lequel le toit (12) présente, à l'avant et à l'arrière, des moyens de guidage (31, 32) associés aux parois d'extrêmité (13, 14) ou similaires de la carrosserie, ce qui permet un déplacement vertical du toit (12) par rapport à la carrosserie.

5. Carrosserie de remorque de camion à paroi-rideau selon la revendication 4, dans lequel le toit (12) présente, à l'avant et à l'arrière ou de façon adjacente à chaque coin, un goujon (31) dépendant du toit, pouvant s'engager librement dans un manchon (32) fixé à une paroi d'extrêmité (13, 14) de la carrosserie.

6. Carrosserie de remorque de camion à paroi-rideau selon la revendication 4 ou 5, dans lequel le toit (12) présente, à son extrêmité frontale, un écran (33) solidaire, recouvrant la surface frontale de la paroi frontale (13) de la carrosserie.

7. Carrosserie de remorque de camion à paroi-rideau selon l'une quelconque des revendications 4 à 6, dans lequel un élément d'étanchéité ou garniture (34) est prévu entre le bord supérieur de la paroi frontale (13) de la carrosserie et le toit (12).

8. Carrosserie de remorque de camion à paroi-rideau selon l'une quelconque des revendications 1 à 7, dans lequel les parties de pilier (36, 37) sont munies chacune de trous alignés (59) adaptés à être repérables point par point, afin de permettre aux parties de pilier (36, 37) d'être verrouillées mécaniquement par une barre en C ou un autre moyen de contrainte, pour permettre au bras hydraulique (45) s'être repéré, maintenu ou replacé.

9. Carrosserie de remoque de camion à paroi-rideau selon l'une quelconque des revendications 1 à 8, dans lequel la partie de pilier inférieure (36) comporte au moins un patte (60) latérale extérieure, un vérin (hydraulique ou autre) pouvant être monté en fontionnement entre cette patte et le plancher de la carrosserie pour prolonger le pilier (16), au cas ou le bras hydraulique intérieure (45) serait hors d'état de fonctionner.

10. Carrosserie de remorque de camion à paroi-rideau selon l'une quelconque des revendications 1 à 8, dans lequel le bras hydraulique (45) de chaque pilier (16) est relié, au moyen d'un tuyau d'alimentation (54) de fluide hydraulique, à un diviseur de débit (53), en communication avec un réservoir (52) de fluide hydraulique auquel est raccordé une pompe (50).

11. Carrosserie de remorque de camion à paroi-rideau selon l'une quelconque des revendications 1 à 10, dans lequel les bras hydrauliques (45) sont à simple effet, le poids, du toit (12) télescopant les bras (45) par suite de la détente de la pression du fluide hydraulique.

12. Carrosserie de remorque de camion à paroi-rideau selon l'une des revendications 10 ou 11, dans lequel la pompe (50) est actionnable à la main.

FIG. 1

FIG. 3

FIG. 2

0 132 103

FIG.5

FIG.4

FIG.6

0 132 103